# EUROPEAN PATENT APPLICATION

(11) **EP 2 085 368 A2**
(43) Date of publication of application: **05.08.2009**
(21) Application number: 09151835.7
(22) Date of filing: 31.01.2009
(51) Int. Cl.: C04B 28/04, C04B 14/06, C04B 14/28, C04B 24/38

(54) **Joint mortar especially for shaped clinker bricks**

(30) Priority: 01.02.2008 PL 38436608
(71) Applicant: ALPOL Gips Sp. z o.o., 26-200 Konskie (PL)
(72) Inventor: Czesak, Zofia, 26-060 Checiny (PL); Gumulka, Wladyslaw, 25-113 Kielce (PL)
(74) Representative: Fietko-Basa, Sylwia

(57) **Abstract**

The joint mortar especially for shaped clinker bricks, consisting of dry cement mixture, filling materials and chemical additives and needing only addition of water, according to the invention is characterized by content, taking into consideration its mass, of 15 - 30% grey and/or white Portland cement, between 50 and 70% quartz sand with grain-size distribution of 0,1 - 0,5 mm, between 3 and 10% lime flour with grain-size distribution of 0,1 - 0,5 mm, between 0,05 and 0,5% modified cellulose ether, between 3 and 10% quartz flour with grain-size distribution of up to 0,3 mm and between 0,05 and 0,5% hydrophobic agent, between 0 and 5% organic and inorganic pigments, and favorably between 0,05 and 1,0 % nanometer-sized additive.

## Description

Joint mortar especially for shaped clinker bricks

An object of this invention is a joint mortar especially for shaped clinker bricks designed to join walls, fences, plinths, facades, chimneys built of clinker face bricks, clinker tiles, as well as join natural and artificial facade stone (except for marble) claddings. This invention finds its most important application in building industry.

The goal of this invention is to formulate a joint mortar that is resistant to migration of soluble salts and thus resistant to efflorescence occurrence. Migrating salts may come from components of mortars or shaped clinker bricks, made of improper raw materials, or from the base because of defective hydro insulation as well as be a result of atmospheric interactions with components of the joint.

Hitherto, all known joints, preventing from occurrence of efflorescence, contained pozzolanic additives, especially fly ash or silica dusts or trass flour and/or hydraulic additive, that is mostly ground granular blast furnace slag, that all bind calcium hydroxide and/or hydrophobic aerating additives and/or starch ethers.

The joint mortar especially for shaped clinker bricks, consisting of dry cement mixture, filling materials and chemical additives and needing only addition of water, according to the invention is characterized by content, taking into consideration its mass, of 15 - 30% grey and/or white Portland cement, between 50 and 70% quartz sand with grain-size distribution of 0,1 - 0,5 mm, between 3 and 10% lime flour with grain-size distribution of 0,1 - 0,5 mm, between 0,05 and 0,5% modified cellulose ether, between 3 and 10% quartz flour with grain-size distribution of up to 0,3 mm and, between 0,05 and 0,5% hydrophobic agent, between 0 and 5% organic and inorganic pigments, and preferably between 0,05 and 1,0 % nanometer-sized additive belonging especially to the group of silicates.

The joint mortar, according to the invention, also contains preferably between 1 and 10% pozzolanic additives, especially fly ash or micro-silica or trass flour, and/or between 1 and 5% hydraulic additive, especially ground granular blast furnace slag, and/or starch ethers and/or additives improving elasticity, added especially in the form of ready dispersion of acryl copolymer resins and/or resins of styrene-butadiene copolymer accounting for up to 5%, and/or retardants and/or accelerators of cement binding and hardening, widely known on the market, and/or plasticizers or super plasticizers in the amount between 0,5 and 2% of cement mass and/or between 0,1 and 2,0% fibers, especially cellulose or polyamide or polypropylene or glass, and/or other additives modifying its rheology, especially guar gum ethers accounting for 0,05 up to 0,5% of the mass.

The joint mortar especially for shaped clinker bricks, according to the invention, maintains its physical and chemical properties in the full value ranges.

The joint mortar, according to the invention, reveals much greater resistance to migration of soluble salts as well as lower water absorption, decreased absorbability, increased density of hardened mortar and increased compression strength in comparison to products of this type, already available on the market, what was confirmed by tests of absorption, compression strength and capability to migration of saturated solution of sodium sulfate.

Test in accordance with standard PN EN 1015-18 confirmed that the joint mortar, the object of this invention, reveals the lowest water absorption in comparison to other joints, available on the market.

Test, consisting in storage of joint mortars in saturated solution of sodium sulfate, confirmed that the object of this invention, that is the joint containing nano-additives demonstrates much greater resistance to the process of soluble salt migration.

Example 1

To obtain the joint for practical use, following ingredients were used: taking into consideration its mass 22% CEM I Portland cement, 61% quartz sand with grain-size distribution of 0,1 - 0,5 mm, 7,0% lime flour with grain-size distribution of 0,1 - 0,5 mm, 7% quartz flour with grain-size distribution of up to 0,3 mm, 3,0% fly ash, 0,2% modified methylhydroxyethylcellulose with viscosity of 15000 mPa·s, 0,3% hydrophobic agent based on the mixture of sodium oleate and calcium stearate, 0,5% nanometer-sized additive belongs to the group of silicates, alkaline activated, modified by organic ingredients, 2,5% ferric pigment and 21,0% water in relation to dry mass. The joint was prepared to tests in compliance with standard PN EN-998-1. Next, following tests were performed:

- water absorption test according to standard PN EN 1015-18 "Test methods for mortars"- Part 18: Determination of coefficient of water absorption, caused by capillary action of hardened mortar". This test consists in measurement of the amount of water absorbed on fractures of hardened and seasoned blocks of 4x4x16 cm in size in relation to time;

- compression strength test according to standard PN EN 1015-11 "Test methods for mortars" - Part 11: Determination of bending and compression strength of hardened mortar". This test consists in measurement of compression strength of blocks of 4x4x16 cm in size by means of hydraulic press.

- mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,02 kg/(m²•min^{0.5})

compression strength - 11 MPa

mortar capability to inhibit migration of sodium sulfate - lack of crystallized

salts inside the mortar. The mortar block surface clean.

Example 2

To obtain the joint for practical use, following ingredients were used: taking into consideration its mass 16% CEM I Portland cement, 70% quartz sand with grain-size distribution of 0,1 - 0,5 mm, 4,0% lime flour with grain-size distribution of 0,1 - 0,5 mm, 9% quartz flour with grain-size distribution of up to 0,3 mm, 1,0% micro-silica, 0,1% modified methylhydroxyethylcellulose with viscosity of 15000 mPa·s, 0,5% hydrophobic agent based on the mixture of sodium oleate and calcium stearate, 0,1% nanometer-sized additive belongs to the group of silicates, alkaline activated, modified by organic ingredients, 1,5% ferric pigment, 3% additives improving elasticity, added especially in the form of ready dispersion of acrylic copolymer resins and 18,0% water in relation to dry mass. The joint was prepared to tests in compliance with standard PN EN-998-1. Next, following tests were performed:

- water absorption test according to standard PN EN 1015-18 "Test methods for mortars"- Part 18: Determination of coefficient of water absorption, caused by capillary action of hardened mortar". This test consists in measurement of the amount of water absorbed on fractures of hardened and seasoned blocks of 4x4x16 cm in size in relation to time;

- compression strength test according to standard PN EN 1015-11 "Test methods for mortars" - Part 11: Determination of bending and compression strength of hardened mortar". This test consists in measurement of compression strength of blocks of 4x4x16 cm in size by means of hydraulic press.

- mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,04 kg/(m²•min^{0.5})

compression strength - 10 MPa

mortar capability to inhibit migration of sodium sulfate - lack of crystallized

salts inside the mortar. The mortar block surface clean.

Example 3:

To obtain the joint for practical use, following ingredients were used: taking into consideration its mass 30% CEMI Portland cement, 50% quartz sand with grain-size distribution of 0,1 - 0,5 mm, 10,0% lime flour with grain-size distribution of 0,1 - 0,5 mm, 3% quartz flour with grain-size distribution of up to 0,3 mm, 7,0% fly ash, 0,5% modified methylhydroxyethylcellulose with viscosity of 15000 mPa·s, 0,1 % hydrophobic agent based on the mixture of sodium oleate and calcium stearate, 0,8% nanometer-sized additive belongs to the group of silicates, alkaline activated, modified by organic ingredients, 4,0% ferric pigment and 23,0% water in relation to dry mass. The joint was prepared to tests in compliance with standard PN EN-998-1. Next, following tests were performed:

- water absorption test according to standard PN EN 1015-18 "Test methods for mortars"- Part 18: Determination of coefficient of water absorption, caused by capillary action of hardened mortar". This test consists in measurement of the amount of water absorbed on fractures of hardened and seasoned blocks of 4x4x16 cm in size in relation to time;

- compression strength test according to standard PN EN 1015-11 "Test methods for mortars" - Part 11: Determination of bending and compression strength of hardened mortar". This test consists in measurement of compression strength of blocks of 4x4x16 cm in size by means of hydraulic press.

- mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,01 kg/(m²·min^{0.5})

compression strength - 14 MPa

mortar capability to inhibit migration of sodium sulfate - lack of crystallized

salts inside the mortar. The mortar block surface clean.

Example 4

To obtain the joint for practical use, following ingredients were used: taking into consideration its mass 22% CEMI Portland cement, 61 % quartz sand with grain-size distribution of 0,1 - 0,5 mm, 7,0% lime flour with grain-size distribution of 0,1 - 0,5 mm, 7% quartz flour with grain-size distribution of up to 0,3 mm, 0,2% modified methylhydroxyethylcellulose with viscosity of 15000 mPa·s, 0,3% hydrophobic agent based on the mixture of sodium oleate and calcium stearate, 0,5% nanometer-sized additive belongs to the group of silicates, alkaline activated, modified by organic ingredients, 2,5% ferric pigment, 3% ground granular blast furnace slag, 0,13% calcium formate, 0,3% cellulose fibers, super plasticizer in amount 0,5% of cement mass, and 19,0% water in relation to dry mass. The joint was prepared to tests in compliance with standard PN EN-998-1. Next, following tests were performed:

- water absorption test according to standard PN EN 1015-18 "Test methods for mortars"- Part 18: Determination of coefficient of water absorption, caused by capillary action of hardened mortar". This test consists in measurement of the amount of water absorbed on fractures of hardened and seasoned blocks of 4x4x16 cm in size in relation to time;

- compression strength test according to standard PN EN 1015-11 "Test methods for mortars" - Part 11: Determination of bending and compression strength of hardened mortar". This test consists in measurement of compression strength of blocks of 4x4x16 cm in size by means of hydraulic press.

- mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,02 kg/(m²·min^{0.5})

compression strength - 12 MPa

mortar capability to inhibit migration of sodium sulfate - lack of crystallized

salts inside the mortar. The mortar block surface clean.

Example 5

To obtain the joint for practical use, following ingredients were used: taking into consideration its mass 22% CEMI Portland cement, 62% quartz sand with grain-size distribution of 0,1 - 0,5 mm, 7,0% lime flour with grain-size distribution of 0,1 - 0,5 mm, 7% quartz flour with grain-size distribution of up to 0,3 mm, 0,2% modified methylhydroxyethylcellulose with viscosity of 15000 mPa·s, 0,3% hydrophobic agent based on the mixture of sodium oleate and calcium stearate, 0,5% nanometer-sized additive belongs to the group of silicates, alkaline activated, modified by organic ingredients, 0,5% ferric pigment ,2% ground granular blast furnace slag, 0,05% starch ether, 2% additives improving elasticity, added especially in the form of ready dispersion of acrylic copolymer resins, 0,05% guar gum ether and 20,0% water in relation to dry mass. The joint was prepared to tests in compliance with standard PN EN-998-1. Next, following tests were performed:

- water absorption test according to standard PN EN 1015-18 "Test methods for mortars"- Part 18: Determination of coefficient of water absorption, caused by capillary action of hardened mortar". This test consists in measurement of the amount of water absorbed on fractures of hardened and seasoned blocks of 4x4x16 cm in size in relation to time;

- compression strength test according to standard PN EN 1015-11 "Test methods for mortars" - Part 11: Determination of bending and compression strength of hardened mortar". This test consists in measurement of compression strength of blocks of 4x4x16 cm in size by means of hydraulic press.

- mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,02 kg/(m²•min^{0.5})

compression strength - 11 MPa

mortar capability to inhibit migration of sodium sulfate - lack of crystallized

salts inside the mortar. The mortar block surface clean.

Example 6

To obtain the joint for practical use, following ingredients were used: taking into consideration its mass 22% CEMI Portland cement, 61 % quartz sand with grain-size distribution of 0,1 - 0,5 mm, 6% lime flour with grain-size distribution of 0,1 - 0,5 mm, 6% quartz flour with grain-size distribution of up to 0,3 mm, 0,05% modified methylhydroxyethylcellulose with viscosity of 15000 mPa·s, 0,3% hydrophobic agent based on the mixture of sodium oleate and calcium stearate, 0,5% nanometer-sized additive belongs to the group of silicates, alkaline activated, modified by organic ingredients, 0,8% ferric pigment, 5%-ground granular blast furnace slag, 4% additives improving elasticity, added especially in the form of ready dispersion of styrene-butadiene copolymer resins, 0,8% polyamide fibers , plasticizer in amount 1% of cement mass, 0,15% guar gum ether and 18,0% water in relation to dry mass. The joint was prepared to tests in compliance with standard PN EN-998-1. Next, following tests were performed:

- water absorption test according to standard PN EN 1015-18 "Test methods for mortars"- Part 18: Determination of coefficient of water absorption, caused by capillary action of hardened mortar". This test consists in measurement of the amount of water absorbed on fractures of hardened and seasoned blocks of 4x4x16 cm in size in relation to time;

- compression strength test according to standard PN EN 1015-11 "Test methods for mortars" - Part 11: Determination of bending and compression strength of hardened mortar". This test consists in measurement of compression strength of blocks of 4x4x16 cm in size by means of hydraulic press.

- mortar capability to inhibit migration of sodium sulfate according to our own method has also been checked. This test consists in storage of blocks of 4x4x16 cm in size, made of the mortar, in saturated solution of sodium sulfate for the period of 2 months. An observation of the surface and migration of salt through the mortar of the block, broken into halves, after 2 months is the result of this test. The following results were obtained in this example:

water absorption - 0,01 kg/(m²·min^{0.5})

compression strength - 13 MPa

mortar capability to inhibit migration of sodium sulfate - lack of crystallized

salts inside the mortar. The mortar block surface clean.

## Claims

1. The joint mortar especially for shaped clinker bricks, consisting of dry cement mixture, filling materials and chemical additives and needing only addition of water, **characterized in that** content, taking into consideration its mass, of 15 - 30% grey and/or white Portland cement, between 50 and 70% quartz sand with grain-size distribution of 0,1 - 0,5 mm, between 3 and 10% lime flour with grain-size distribution of 0,1 - 0,5 mm, between 0,05 and 0,5% modified cellulose ether, and between 3 and 10% quartz flour with grain-size distribution of up to 0,3 mm, between 0,05 and 0,5% hydrophobic agent, between 0 and 5% organic and inorganic pigments, and nanometer-sized additive preferably between 0,05 and 1,0 %.

2. The joint mortar according to the claim 1 **characterized in that** the nanometer-sized additive belongs to the group of silicates.

3. The joint mortar, according to the claim 1 or 2, **characterized in that** preferably content of pozzolanic additives, between 1 and 10% of its mass, especially fly ash or micro-silica or trass flour, and/or between 1 and 5% hydraulic additive, especially ground granular blast furnace slag, and/or starch ethers and/or additives improving elasticity, added especially in the form of ready dispersion of acryl copolymer resins and/or resins of styrene-butadiene copolymer accounting for up to 5%, and/or retardants and/or accelerators of cement binding and hardening, widely known on the market, and/or plasticizers or super plasticizers in the amount between 0,5 and 2% of cement mass and/or between 0,1 and 2,0% fibers, especially cellulose or polyamide or polypropylene or glass, and/or other additives modifying its rheology, especially guar gum ethers accounting for 0,05 up to 0,5% of the mass.
